# EUROPEAN PATENT APPLICATION

(11) **EP 3 502 981 A1**
(43) Date of publication of application: **26.06.2019**
(21) Application number: 18213376.9
(22) Date of filing: 18.12.2018
(51) Int. Cl.: G06Q 10/02

(54) **LAUNDRY SERVICE SYSTEM FOR SCHEDULING AND PAYMENT**

(30) Priority: 22.12.2017 IN 201711046421
(71) Applicant: Carrier Corporation, Jupiter, FL 33478 (US)
(72) Inventor: Mukundala, Sumanth Kumar, 500081 Telangana (IN)
(74) Representative: Schmitt-Nilson Schraud Waibel Wohlfrom Patentanwälte Partnerschaft mbB

(57) **Abstract**

A method and system for controlling access to a laundry machine is disclosed. A method includes receiving a reservation for the laundry machine for a time period; preparing a means for exclusive access to the laundry machine during the reserved time period; upon receiving the means for exclusive access, allowing the laundry machine to be used; wherein: the reservation is received remotely from the laundry machine.

## Description

### BACKGROUND

Exemplary embodiments pertain to the art of electronics. In particular, the present disclosure relates to a method and system for improving reservations and security for laundry services in a hospitality environment.

In a hospitality environment (such as a hotel, motel, dormitory, bed and breakfast, apartment building, and the like), there is often a shared laundry facility for use by guests. A shared laundry facility often includes one or more washing machines or dryers (collectively referred to as a "laundry machine") in a central location. The machines may or may not require money to operate.

Several issues can arise in a shared laundry situation. There are a limited number of machines in laundry facility. Without the ability to check the status of the machines, a guest might end up walking across the entire property to reach the laundry facility, carrying a lot of clothes, only to end up unable to use the laundry facility because the machines are occupied. If the machines are in use, there might not be a way for the guest to ensure that he can use the machines in the future. The machines are typically not secured except by any building security. Therefore, any person who can enter the facility can access the laundry machines, presenting a safety issue. Adding to the security issue is the fact that any person can access the machines, meaning that the clothes are not secure.

### BRIEF DESCRIPTION

According to one embodiment, a method and system for controlling access to a laundry machine is disclosed. A method includes receiving a reservation for the laundry machine for a time period; preparing a means for exclusive access to the laundry machine during the reserved time period; upon receiving the means for exclusive access, allowing the laundry machine to be used; wherein: the reservation is received remotely from the laundry machine.

In addition to one or more features described above, or as an alternative, further embodiments may include sending an alert at a predetermined time before the reserved time period.

In addition to features described above, or as an alternative, further embodiments may include wherein the alert is sent to a mobile electronic device.

In addition to features described above, or as an alternative, further embodiments may include sending an alert at a predetermined time before an end of the reserved time period.

In addition to features described above, or as an alternative, further embodiments may include wherein the reservation is received remotely from a control panel located in a room in a hospitality facility associated with the laundry machine.

In addition to features described above, or as an alternative, further embodiments may include wherein the reservation is received remotely from mobile electronic device, wherein the mobile electronic device is registered with an associated hospitality entity.

In addition to features described above, or as an alternative, further embodiments may include wherein the unique identification information is associated with a location of the beacon transmitter.

In addition to features described above, or as an alternative, further embodiments may include wherein the means for exclusive access comprises a personal identification number.

In addition to features described above, or as an alternative, further embodiments may include wherein the means for exclusive access comprises a mobile electronic device configured to wirelessly send a signal to the laundry machine.

In addition to features described above, or as an alternative, further embodiments may include wherein the means for exclusive access comprises a key card used to enter a room in a hospitality entity

In addition to features described above, or as an alternative, further embodiments may include wherein canceling the reservation upon the receipt of a check-out of the guest associated with the reservation.

In addition to features described above, or as an alternative, further embodiments may include wherein canceling the reservation a predetermined time after a beginning of the reservation, if the reservation has not been claimed.

According to one embodiment, a method and system for controlling access to a laundry machine is disclosed. A system includes a laundry machine, a network coupled to the laundry machine, and a computer system coupled to the network. The computer system is configured to perform the following: receiving a reservation for the laundry machine for a time period; preparing a means for exclusive access to the laundry machine during the reserved time period; upon receiving the means for exclusive access, allowing the laundry machine to be used; wherein: the reservation is received remotely from the laundry machine.

### BRIEF DESCRIPTION OF THE DRAWINGS

The following descriptions should not be considered limiting in any way. With reference to the accompanying drawings, like elements are numbered alike:
FIG. 1 is a block diagram illustrating an exemplary system of one or more embodiments; and
FIG. 2 is a flowchart illustrating the operation of one or more embodiments.

### DETAILED DESCRIPTION

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described above, hospitality providers may provide self-serve laundry services for their guests. However, existing laundry services has drawbacks, as noted above. These include the inability to check availability of laundry machines, to reserve laundry machines, and to prevent theft.

In one or more embodiments, laundry machines are connected to a network that allows guests to check a status of the laundry machines, reserve laundry machines, and provide security with respect to the laundry machines. A guest is able to use an in-room keypad or a mobile electronic device to reserve a laundry machine, pay for the laundry machine, and secure the contents of the laundry machine.

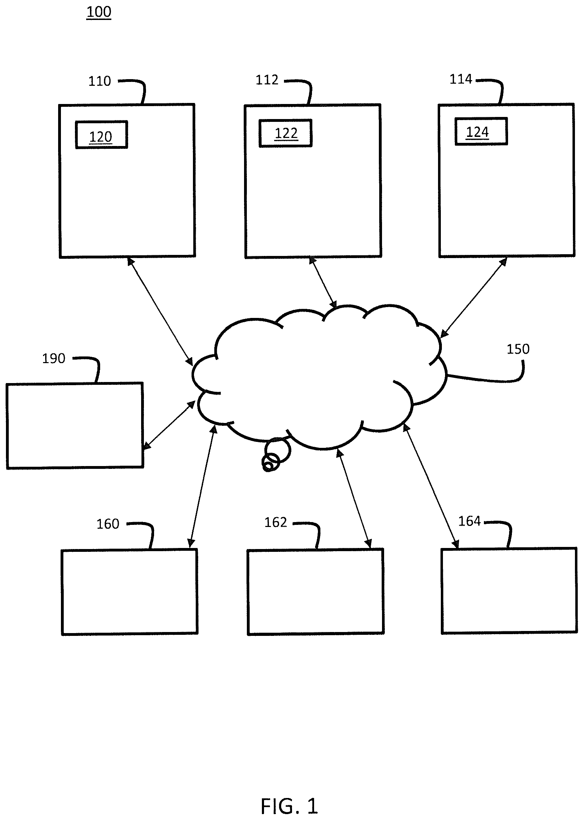

A block diagram illustrating a laundry system 100 is presented in FIG. 1. Laundry system 100 includes one or more laundry machines 110, 112, through 114. A laundry machine may be a washing machine configured to wash clothes using water and detergent, a dryer configured to tumble dry clothes using heat, a machine that combines the features of washing machines and dryers, and the like. Each of the laundry machines has a control panel 120, 122, through 124 through which a guest can customize the operation of the laundry machine (such as the length of the cycle, the temperature of the water or dryer, and the like). It should be understood that, although not illustrated, each of the laundry machines may also be coupled to electric power or gas lines, and washing machines are coupled to water supplies and drains.

Each of the laundry machines is coupled to a computer network 150. Computer network 150 may be coupled to a cloud platform, a dedicated server, or another type of computing device. Each of the laundry machines is communicatively coupled to the computer network. In such a manner, each laundry machine can communicate its status to the computer network. Status can include whether or not the laundry machine is in use and the estimated time left until the laundry machine finishes its current load. The computer network can communicate requests to the laundry machine.

Coupled to the computer network 150 are one or more devices 160, 162, and 164. As will be described in further detail below, a guest can use devices 160, 162, and 164 to make reservations and check the status of laundry machines 110, 112, and 114. Devices 160, 162, and 164 may take one of a variety of different form factors, such as in-room consoles or mobile electronic devices.

Also coupled to computer network 150 is a computer 190. Computer 190 can be in one of a variety of different form factors, such as a server, desktop computer, laptop computer, embedded computer, and the like. Computer 190 can be located in a variety of different locations, such as local to laundry machines 110, 112, and 114 or at a more distant location. Computer 190 can be embodied in the form of cloud computing services.

Computer 190 can be configured to control access to each laundry machine. A reservation can be made and the guest who makes the reservation will be granted exclusive access to the reserved laundry machine. The reservation can be made in one of a variety of different manners. In some embodiments, a guest may make a reservation on any unoccupied machine. In some embodiments, a guest may be able to view availability during a certain time period (such as the next twelve hours or twenty-four hours) and reserve the laundry machine for that time period. At a predetermined time before the reservation becomes active (for example, five minutes), an alert can be sent to the guest (such as via a mobile electronic device or an in-room control panel) to remind the guest of the reservation.

In some embodiments, the guest can cancel the reservation at any time prior to using the laundry machine. In such a manner, the laundry machine is made available for reservation or use by other guests. In some embodiments, at a certain amount of time after the reservation first became active (for example, five minutes after start of the reservation time), a cancellation can be automatically made by the system if the guest has not begun using the laundry machine. In some embodiments, the guest can be charged for reserving the laundry even if the guest did not use the machine (to discourage people from making a reservation unless the guest actually intends to use the laundry machines).

In some embodiments, there can be limits imposed on reservations. For example, a guest could be limited to one laundry machine at a time, in order to allow multiple guests the ability to use laundry facilities. The limit can be any number.

In some embodiments, there can be an automatic cancellation if the guest is no longer registered at the hospitality facility (for example, if the guest checks out of the facility or the registration is otherwise canceled). In such a manner, if a guest is no longer registered at the hospitality facility, any reservations of laundry machines that the guest made are removed.

Upon cancellation, an alert can be sent to other interested guests. For example, a guest may be attempting to make a reservation at a certain time, but the laundry machines are occupied at that time. The guest can request that an alert be sent to him if there is a cancellation during a selected time period.

Exclusive access to the laundry machines can be controlled in one of a variety of different means of exclusive access. In on embodiment, a secret personal identification number (PIN) can be issued to a guest. Thereafter, only the person with the correct PIN can open the laundry machine. An actuator can be present in the laundry machine that prevents the opening of a door of the laundry machine unless the correct PIN is entered. In one embodiment, the guest's credentials can be used to access the laundry machine. At certain establishments, a guest can be issued a key card that utilizes a magnetic stripe or radio frequency identification (RFID) technology to allow the guest to access his room. That key card can also be used at a card reader located at the laundry machine. A door of the laundry machine can be configured such that it can only be opened by the correct key card (using one of a variety of different techniques, both known in the art or developed in the future). Other identification methods can be used (for example, fingerprint readers, facial recognition, and the like). In some embodiments, if there is no current reservation of a laundry machine, any guest can use the laundry machine. In other embodiments, a guest can only use the laundry machine if he first makes a reservation. Such a restriction would prevent a scenario of when a guest checks to find an available machine and goes to the laundry room to use the machine, only to find that someone has started using the machine. Making a reservation first locks the machine to prevent other guests from using the machine. In addition, reservations can be controlled such that a reservation only can be made by a guest who has checked-in to the hospitality facility. In some embodiments, this entails registering the guest's mobile electronic device with the hospitality entity associated with the laundry machine.

The connection to computer network 150 also allows the laundry machine to charge for each use electronically. Instead of requiring payment using cash or coins, the payment can be made through the guest's account with the hospitality entity.

In some embodiments, notifications can be generated for certain actions of a laundry machine. For example, when a laundry machine has finished a wash or drying cycle, that fact can be forwarded to computer network 150. Thereafter, a notification can be generated such that the notification is received by the guest who is using the service. As will be described in further detail below, the notification can show up on a guest's mobile electronic device (such as a smartphone, tablet, e-reader, email, laptop, and the like) in a guest's room (such as on a console in the room or the like).

In some embodiments, there can be timing associated with the notification, in an attempt to prevent guests from starting a laundry load and leaving it in the laundry machine for an extended period of time. After a predetermined amount of time (such as 5 or 10 minutes), if the laundry machine has not been emptied, a notification can be sent to an employee of the hospitality entity. In such a manner, the hospitality entity can send a worker to empty the laundry machine. In some embodiments, the duration of the timer can change if another guest has a reservation of the machine.

A variety of different methods can be used to check status and create reservations of the laundry machines. For example, some hospitality providers utilize control panels in each room. Such a control panel can be used to create laundry reservations. In some embodiments, a control panel may be built-in to each room (such as mounted on a wall or integrated with a thermostat). In some embodiments, a control panel can be portable and provided to each guest upon check-in.

In some embodiments, a software application ("app") can be used to create the reservations and check the status of the laundry machines. The app can be loaded onto a guest's own mobile electronic device, such as a smartphone, tablet, e-reader, music player, and the like.

The app can be used to provide the exclusive access to the laundry machines. This can occur in one of a variety of different ways. In some embodiments, the secret PIN that the guest uses to access the laundry machine is assigned by the system. The PIN assignment can be sent to the app. In some embodiments, the PIN assignment can be sent via a short message system (SMS) message received by the guest's mobile electronic device.

In some embodiments, the mobile electronic device can be used to provide exclusive access. The app can allow the mobile electronic device to transmit a short range wireless signal, such as via near field communication (NFC), via Bluetooth, or via WiFi. The mobile electronic device can then be used at a terminal located at or near the laundry machine. In some embodiments, the app also can be used to unlock a door to the guest's room, to the room with the laundry machines, or to other guest exclusive areas (such as a pool, fitness room, or business center).

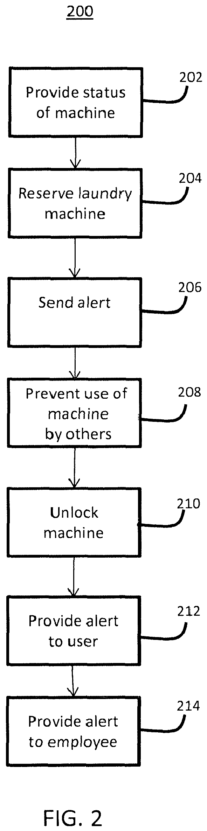

With respect to FIG. 2, a method 200 is presented that illustrates the operation of one or more embodiments. Method 200 is merely exemplary and is not limited to the embodiments presented herein. Method 200 can be employed in many different embodiments or examples not specifically depicted or described herein. In some embodiments, the procedures, processes, and/or activities of method 200 can be performed in the order presented. In other embodiments, one or more of the procedures, processes, and/or activities of method 200 can be combined, skipped, or performed in a different order.

A guest decides he wants to wash his clothes. He checks a device (such as a console or a mobile electronic device) to determine a status of laundry machines at the hospitality facility in which he is located (block 202). The guest then reserves a time to use one or more laundry machines (block 204). The reservation can be for at a particular time within a predetermined time window (such as within the next 24 hours).

At a predetermined amount of time before the time of the reservation, an alert is sent to the guest's device (block 206). The guest may choose to have the alert sent to any device. For example, even if the guest placed the reservation using a console within his room, the guest can request that the alert be sent to his mobile electronic device. The alert can be via an app loaded within the mobile electronic device. The alert can be via a short message system message sent to the mobile electronic device. The alert can be via an automated voice message.

The reserved laundry machine is locked to prevent others from using the laundry machine (block 208). The reserved laundry machine is unlocked through the use of one of a variety of means for exclusive access (block 210). For example, a PIN can be used, a key card, an RFID card, a mobile electronic device, and other methods described above. After the machine is in use, an alert can be generated to be sent to the guest at a predetermined time before the machine finishes (block 212). If the laundry from the machine is not retrieved after a predetermined amount of time, an alert is sent to an employee of the hospitality entity (block 214). Thereafter, the employee is able to retrieve the laundry, enabling others to use the laundry machine.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer-implemented method for controlling access to a laundry machine comprising:
receiving a reservation for the laundry machine for a time period;
preparing a means for exclusive access to the laundry machine during the reserved time period;
upon receiving the means for exclusive access, allowing the laundry machine to be used; wherein:
the reservation is received remotely from the laundry machine.

2. The computer-implemented method of claim 1, further comprising:
sending an alert at a predetermined time before the reserved time period.

3. The computer-implemented method of claim 2, wherein the alert is sent to a mobile electronic device.

4. The computer-implemented method of any of the preceding claims, further comprising:
sending an alert at a predetermined time before an end of the reserved time period.

5. The computer-implemented method of any of the preceding claims wherein:
the reservation is received remotely from a control panel located in a room in a hospitality facility associated with the laundry machine; or
the reservation is received remotely from a mobile electronic device; wherein the mobile electronic device is registered with an associated hospitality entity.

6. The computer-implemented method of any of the preceding claims wherein:
the means for exclusive access comprises a personal identification number; or
the means for exclusive access comprises a mobile electronic device configured to wirelessly send a signal to the laundry machine; or
the means for exclusive access comprises a key card used to enter a room in a hospitality entity.

7. The computer-implemented method of any of the preceding claims, further comprising:
canceling the reservation upon the receipt of a check-out of the guest associated with the reservation.

8. The computer-implemented method of any of the preceding claims, further comprising:
canceling the reservation a predetermined time after a beginning of the reservation, if the reservation has not been claimed.

9. A system for controlling access to a laundry machine, comprising:
a laundry machine;
a network coupled to the laundry machine;
a computer system coupled to the network, the computer system configured to:
receive a reservation for the laundry machine for a time period;
prepare a means for exclusive access to the laundry machine during the reserved time period;
upon receiving the means for exclusive access, allow the laundry machine to be used; wherein:
the reservation is received remotely from the laundry machine.

10. The system of claim 9, wherein the computer system is further configured to:
sending an alert at a predetermined time before the reserved time period.

11. The system of claim 10, wherein the alert is sent to a mobile electronic device.

12. The system of any of claims 9 to 11 wherein the computer system is further configured to:
one or more control panels located in a room in a hospitality facility associated with the laundry machine; wherein:
the reservation is received remotely from the control panel.

13. The system method of any of claims 9 to 11 wherein:
the reservation is received remotely from mobile electronic device.

14. The system method of any of claims 9 to 13 wherein:
the means for exclusive access comprises a personal identification number; or
the means for exclusive access comprises a mobile electronic device configured to wirelessly send a signal to the laundry machine; or
the means for exclusive access comprises a key card used to enter a room in a hospitality entity.

15. The system of any of claim 9 to 14, wherein the computer system is further configured to:
canceling the reservation upon the receipt of a check-out of the guest associated with the reservation.
